# EUROPEAN PATENT SPECIFICATION

(11) **EP 2 499 324 B1**
(45) Date of publication and mention of the grant of the patent: **16.10.2013**
(21) Application number: 10782061.5
(22) Date of filing: 12.11.2010
(51) Int. Cl.: E21B 17/00, E21B 47/01, G09F 3/08, G01V 15/00

(54) **DEVICE AND METHOD FOR ATTACHING AN ID-MARKER TO A PRODUCTION PIPE**
VORRICHTUNG UND VERFAHREN ZUR BEFESTIGUNG EINER ID-KENNUNG AN EINEM PRODUKTIONSROHR
DISPOSITIF ET PROCÉDÉ POUR RELIER UN MARQUAGE D'IDENTIFICATION À UNE CONDUITE DE PRODUCTION

(30) Priority: 12.11.2009 NO 20093334
(43) Date of publication of application: 19.09.2012
(73) Proprietor: Trac-Id Systems AS, 4064 Stavanger (NO)
(72) Inventor: HALVORSEN, Halvor, N-4027 Stavanger (NO)
(74) Representative: Smedseng, Øyvind
(86) International application number: PCT/NO2010/000411
(87) International publication number: WO 2011/059342

(56) References cited:
- US-A- 4 170 532
- US-A1- 2008 248 225
- US-B2- 7 159 654
- US-B2- 7 383 886

## Description

### Technical field

The present invention regards a device, and a method, for attaching an identification tag to a cylindrical object, more particularly how to attach an RFID tag to a pipe or tubing used in production of oil.

### Background of the invention

Modern oil and gas drilling and production equipment is set under a vast and ridged demand for controlling the age of and the wear on the drill pipes, production tubing and similar, and for keeping track of the maintenance done on the pipes. The present method for controlling such information is either by reading of manually an identification number physically printed on the pipe itself.

Another method is to attach an ID marker, e.g. an RFID marker, to the drill pipe by drilling a slot into the pipe and attaching the marker in the hole.

Drilling a slot for the ID marker or printing an identification number in the material of the pipes or tubing is a method that can only be used on drill pipes since they have a wall thickness that makes it possible to drill in without destroying the structure of the pipe or tubing.

An example of such a solution is patent application number WO 0079239 A1 where it is described a method for drilling a slot or a hole in the pipe itself into which the ID marker is placed.

Further it is shown in US 6347292 B1 a method for marking a drill pipe by either drilling a slot into the material of the pipe or by adding a collar around the pipe into which the ID marker is placed. This collar is fitted around the pipe and tightened by screwing two parts of the collar together.

In US 7014100 B2 it is shown an alternative way of adding an ID marker to the drill pipe. Here an antenna is placed in between the joints of two pipes. The antenna broadcasts a signal unique to each antenna.

US 7383886 B2 describes a device and a method for selective control of fluid flow between a flow pipe of a well and surrounding rocks. The characteristic of the invention is that the flow pipe is provided with an imperforated pipe wall inside of and vis-a-vis said flow channel when installing the flow pipe in the well. Further there is described a possibility to imbed a position marker in a shrink ring.

US 2008/248225 A1 describes a tubular cold shrinkable material that can include an elastomeric composition including a fluoroelastomer composition, where the elastomeric composition is substantially free of an epichlorohydrin composition. The tubular cold shrinkable material can further include a filler material including a reinforcement-grade carbon black. The tubular cold shrinkable material can further include a peroxide curative.

US 7159654 B2 describes a member having a body, the body having two spaced-apart ends, wave energizable identification apparatus which, in one aspect, is radio frequency identification apparatus with integrated circuit apparatus and antenna apparatus on the exterior of the body, and encasement structure encasing the identification apparatus, the encasement structure, in certain aspects, including one or a plurality of layers of heat resistant material and, in certain aspects, at least one layer of heat resistant material, and methods for producing such a member.

The problems with these solutions are that they either only can be used on pipes with a wall thickness over a certain level since production pipes, production tubing or similar, has a low wall thickness not allowed to either print or weaken in any way.

Or they are not strong enough or suitable for the harsh climate that exists in a drill hole.

The present way of marking pipes or tubing of these dimensions is to paint the numbers on the pipe or tubing itself. The problem with this method is that the paint is easily worn off when the pipe or tubing is in use.

### Summary

It is therefore an objective of the present invention, as stated in the independent claims and the thereto belonging dependent claims, to solve the problems mentioned above.

The way of solving these problems is to place a fitting, usually in the form of a metal ring, containing an ID marker, preferably in the form of an RFID marker, around the pipe or tubing and attach this ring to the pipe or tubing.

The ring is placed around the pipe or tubing and shrunk to fit and it has a hole or a slot in it into which the ID marker is placed. The ring is provided with another hole used for placing a galvanic anode.

### Short description of the drawings

Figure 1 shows a cross section of an embodiment of the present invention.
Figure 2 shows a perspective view of the same embodiment of the present invention as shown in figure 1.
Figure 3 is a perspective view of the same embodiment where the present invention is mounted on the pipe or tubing.

### Detailed description

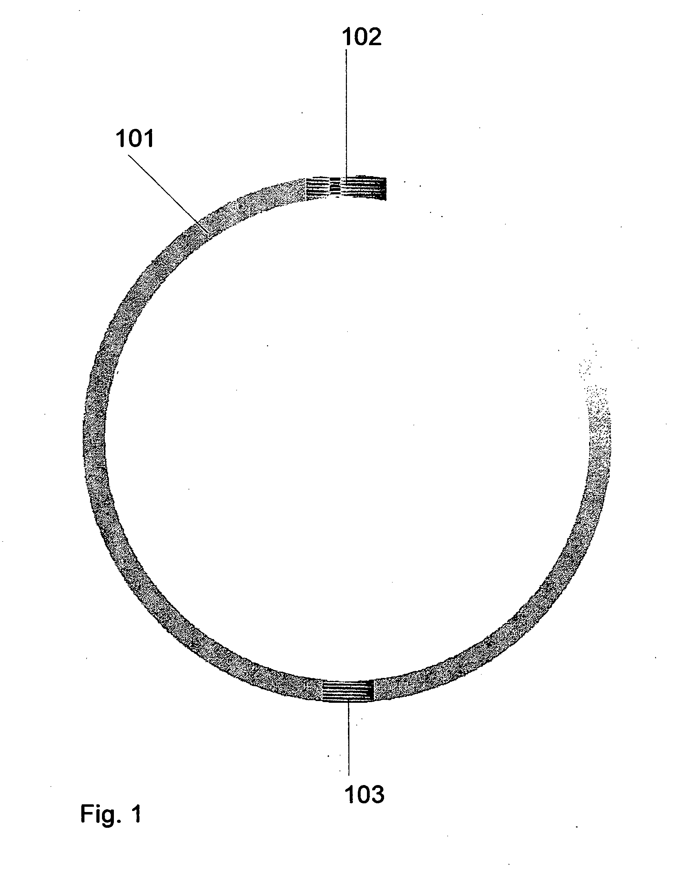

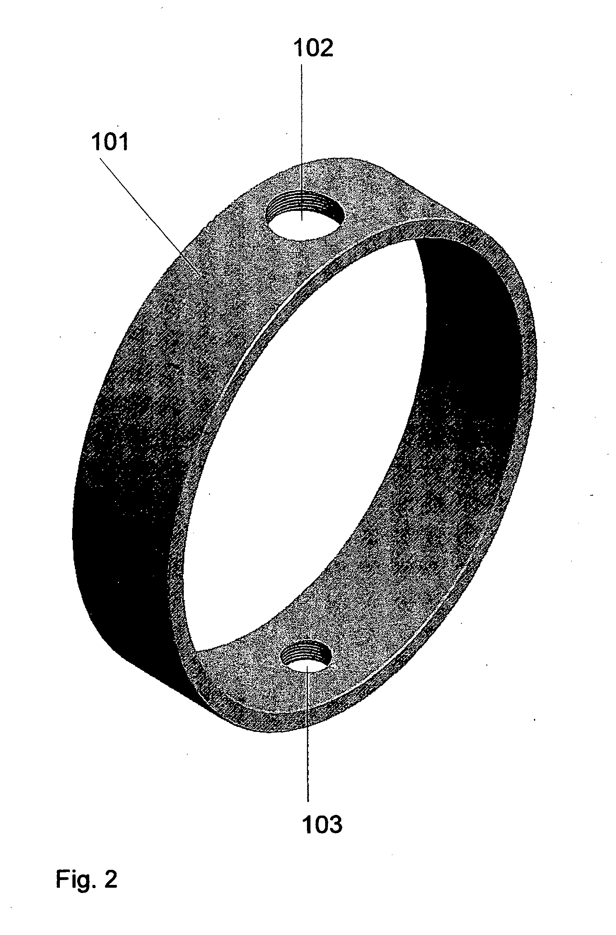

Figure 1 and 2 shows a preferred embodiment of the present invention. It is presented a ring or a band 101 preferably made of metal. The metal ring 101 has a flat, wide edge. The edge has a thickness of such a size that it can hold an ID marker. A hole 102 is placed on the edge of the metal ring 101. The hole 102 is preferably placed at the centre of the width of the ring 101.

The hole 102 can either penetrate the edge of the ring 101 entirely or only partially. The hole 102 is dimensioned in such a way that an ID marker can be fitted in it.

A preferred way of placing the ID marker in the metal ring 101 is to make the hole 102 threaded. This makes it possible to screw the ID marker into the metal ring 101.

Further it is possible to place the ID marker in the metal ring 101 by drilling a hole 102 in the metal ring 101 into which an ID marker is placed. Further the holes 102 can be closed with e.g. a set screw. The hole 102 is further provided with a small window making it possible to read the ID marker.

The metal ring 101 is provided with another hole 103. This hole 103 is used for placing a galvanic anode. This prevents corrosion of the metal ring 101 and the pipe or tubing.

In other embodiments of the present invention the number of holes 102, 103 can vary and the metal ring 101 can be fitted with several smaller holes.

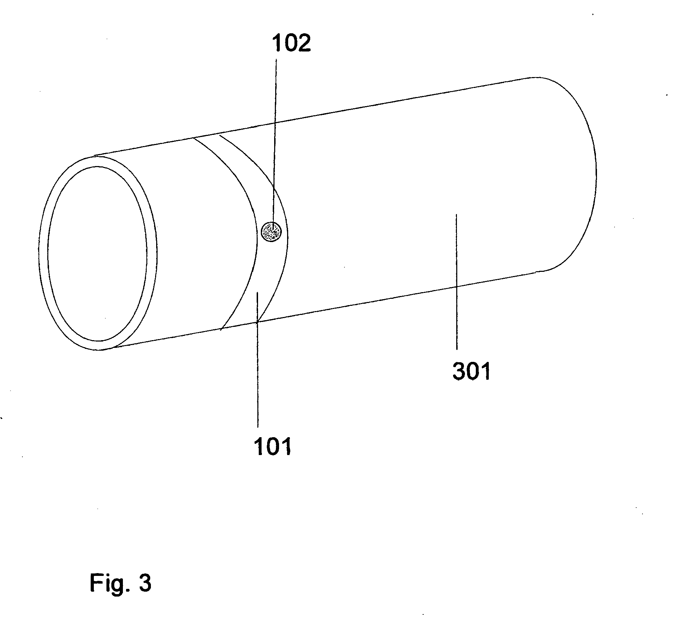

Figure 3 shows an embodiment of the invention where the metal ring 101 is mounted to the pipe or tubing 301.

It is shown that the metal ring 101 can be fitted anywhere on the pipe or tubing.

The method of connecting the metal ring 101 to the pipe or tubing is to shrink the metal ring 101 so that it fits the pipe or tubing. This can be done either thermally or mechanically. A protective and/or electrically insulating material can be installed between the metal ring 101 and the pipe wall for further protection and/or corrosion inhibition of the pipe.

Further the ID marker can also be fitted in the coupling between two sections of pipes or tubing. This can be done either by adding a section to an existing coupling or, if possible, it can be drilled a holes 102 in the coupling into which the ID marker is attached. The way of attaching the ID marker to the coupling can be done in the same way as in the embodiment of the metal ring 101.

## Claims

1. A device (101) for attaching an ID marker to a cylindrical object (301), wherein the device (101) comprises a metal ring (101) shrunk fit to said cylindrical object (301), a first radial hole (102) through the ring (101) and an ID marker placed in said ring, **characterized in that** the metal ring (101) includes a second radial hole through the ring, and a galvanic anode attached to said second radial hole.

2. A device (101) as described in claim 1 further **characterized by** that said cylindrical object (301) is a production pipe or production tubing.

3. A device (101) as described in claim 2 further **characterized by** that said pipe or tubing is a pipe for use in oil and gas exploration and production.

4. A device (101) according to claim 1, wherein said ID marker is a RFID marker.

5. A device (101) according to claim 1 wherein an insulating material can be placed between the metal ring (101) and the cylindrical object (301).

6. A device (101) according to claim 1, wherein said radial holes are threaded.

7. A method of attaching an ID marker to a cylindrical object (301), the method comprising the steps of fitting a metal ring (101) around said cylindrical object (301), shrinking the metal ring (101), and placing said ID marker in a first radial hole (102) through the metal ring (101) **characterized in** placing a galvanic anode in a second radial hole through the metal ring (101).

8. A method according to claim 5, wherein the radial hole (102) is threaded and said ID marker is screwed into the hole (102).

9. A method as described in claim 7, wherein the shrinking can be either thermal or mechanical.

10. A method according to claim 7, including the step of placing an insulating material between the metal ring (101) and said cylindrical object (301).

## Patentansprüche

1. Vorrichtung (101) zum Anbringen einer ID-Markierung an einem zylindrischen Gegenstand (301), wobei die Vorrichtung (101) einen Metallring (101), der auf dem zylindrischen Gegenstand (301) aufgeschrumpft ist, ein erstes radiales Loch (102) durch den Ring (101) und eine in dem Ring untergebrachte ID-Markierung umfasst, **dadurch gekennzeichnet, dass** der Metallring (101) ein zweites radiales Loch durch den Ring und eine Opferanode aufweist, die an dem zweiten radialen Loch angebracht ist.

2. Vorrichtung (101) nach Anspruch 1, die ferner **dadurch gekennzeichnet ist, dass** der zylindrische Gegenstand (301) ein Steigrohr oder Steigrohrstrang ist.

3. Vorrichtung (101) nach Anspruch 2, die ferner **dadurch gekennzeichnet ist, dass** das Rohr oder der Rohrstrang ein Rohr zur Verwendung in der Erdöl- und Erdgasexploration und -förderung ist.

4. Vorrichtung (101) nach Anspruch 1, wobei die I D-Markierung eine RFID-Markierung ist.

5. Vorrichtung (101) nach Anspruch 1, wobei ein Isolationsmaterial zwischen dem Metallring (101) und dem zylindrischen Gegenstand (301) untergebracht werden kann.

6. Vorrichtung (101) nach Anspruch 1, wobei die radialen Löcher ein Gewinde aufweisen.

7. Verfahren zum Anbringen einer ID-Markierung an einem zylindrischen Gegenstand (301), wobei das Verfahren die Schritte des Einrichtens eines Metallrings (101) um den zylindrischen Gegenstand (301) herum, des Schrumpfens des Metallrings (101) und des Unterbringens der ID-Markierung in einem ersten radialen Loch (102) durch den Metallring (101) umfasst und durch Unterbringen einer Opferanode in einem zweiten radialen Loch durch den Metallring (101) gekennzeichnet ist.

8. Verfahren nach Anspruch 5, wobei das radiale Loch (102) ein Gewinde aufweist und die ID-Markierung in das Loch (102) geschraubt wird.

9. Verfahren nach Anspruch 7, wobei das Schrumpfen entweder thermisch oder mechanisch sein kann.

10. Verfahren nach Anspruch 7, das den Schritt des Unterbringens eines Isolationsmaterials zwischen dem Metallring (101) und dem zylindrischen Gegenstand (301) umfasst.

## Revendications

1. Dispositif (101) pour fixer un marqueur d'identification ID à un objet cylindrique (301), dans lequel le dispositif (101) comprend un anneau métallique (101) fretté sur ledit objet cylindrique (301), un premier trou radial (102) à travers l'anneau (101) et un marqueur ID placé dans ledit anneau, **caractérisé en ce que** l'anneau métallique (101) comprend un second trou radial à travers l'anneau et une anode galvanique fixée audit second trou radial.

2. Dispositif (101) selon la revendication 1, **caractérisé en outre en ce que** ledit objet cylindrique (301) est une conduite de production ou une colonne de production.

3. Dispositif (101) selon la revendication 2, **caractérisé en outre en ce que** ladite conduite ou ladite colonne est une canalisation pour usage dans l'exploration et la production de pétrole et de gaz.

4. Dispositif (101) selon la revendication 1, dans lequel ledit marqueur ID est un marqueur RFID.

5. Dispositif (101) selon la revendication 1, dans lequel un matériau isolant peut être placé entre l'anneau métallique (101) et l'objet cylindrique (301).

6. Dispositif (101) selon la revendication 1, dans lequel lesdits trous radiaux sont taraudés.

7. Procédé de fixation d'un marqueur d'identification ID à un objet cylindrique (301), le procédé comprenant les étapes consistant à ajuster un anneau métallique (101) autour dudit objet cylindrique (301), fretter l'anneau métallique (101) et placer ledit marqueur ID dans un premier trou radial (102) à travers l'anneau métallique (101), **caractérisé en ce que** l'on place une anode galvanique dans un second trou radial à travers l'anneau métallique (101).

8. Procédé selon la revendication 5, dans lequel le trou radial (102) est taraudé et ledit marqueur ID est vissé dans le trou (102).

9. Procédé selon la revendication 7, dans lequel le frettage peut être thermique ou mécanique.

10. Procédé selon la revendication 7, comprenant l'étape de placement d'un matériau isolant entre l'anneau métallique (101) et ledit objet cylindrique (301).
